# EUROPÄISCHE PATENTANMELDUNG

(11) **EP 1 086 885 A2**
(43) Veröffentlichungstag der Anmeldung: **28.03.2001**
(21) Anmeldenummer: 00117610.6
(22) Anmeldetag: 16.08.2000
(51) Int. Cl.: B62D 43/04

(54) **Hebevorrichtung**

(30) Priorität: 23.09.1999 DE 19945634
(71) Anmelder: Krupp Bilstein GmbH, 58256 Ennepetal (DE)
(72) Erfinder: Naumes, Guido, Dipl.-Ing., 54317 Morscheid (DE); Alten, Ferdinand, 54429 Mandern (DE)

(57) **Zusammenfassung**

Um eine Hebevorrichtung zur Aufnahme eines Reserverades unter einem Fahrzeugboden (1) mit einer Aufnahmeplatte (3) oder einem Aufnahmegestell für das Reserverad, wobei die Aufnahmeplatte (3) oder das Aufnahmegestell über einen, mittels einer Seiltrommel (8) angetriebenen beweglichen Seilzug (6) gehoben und gesenkt wird, mit einem Sperriegel, der die Hebevorrichtung in der angehobenen Stauposition gegen Herabfallen sichert, derartig zu gestalten, daß bei einem einfachen Aufbau die Vielfalt der Fahrzeuggestaltung erhalten bleibt und trotzdem eine sichere Funktion gegeben ist, wird der Sperriegel über ein reibschlüssig mit der Seiltrommel (8) verbundenes Mitnahmeelement bewegt.

## Beschreibung

Die Erfindung betrifft eine Hebevorrichtung zur Aufnahme eines Reserverades nach dem Oberbegriff des Anspruchs 1.

Bei manchen Fahrzeugen ist es üblich, ein Reserverad unter dem Fahrzeugboden anzuordnen. Das Reserverad wird in der verstauten Position so gehalten, daß der Reifen am Boden des Fahrzeuges anliegt. Das Halten erfolgt mittels einer Hebevorrichtung, die über einen Seilzug eine Aufnahmeplatte oder ein Aufnahmegestell, auf dem das Reserverad liegt, gegen den Boden des Fahrzeugs zieht. Der Seilzug wird mittels einer Seiltrommel bewegt, welche wiederum durch ein abnehmbares Werkzeug, vorzugsweise über eine Handkurbel, betätigt wird. Sofern es erforderlich ist, wird zwischen der Handkurbelaufnahme und der Seiltrommel ein Getriebe angeordnet.

Um sicherzustellen, daß die Aufnahmeplatte bzw. das Aufnahmegestell mit dem aufliegenden Reserverad in der verstauten Position gehalten wird, auch wenn das Seil gerissen ist, ist es üblich, die Aufnahmeplatte bzw. das Aufnahmegestell mittels eines Sperriegels gegen Herabfallen zu sichern.

Nach der DE 197 09 640 A1 ist es bekannt, den Sperriegel beim Einsetzen der Handkurbel durch das Niederdrücken eines Entriegelungsstiftes aus der Eingriffsposition zu entriegeln. Sobald nach dem Hochkurbeln der Aufnahmeplatte bzw. des Aufnahmegestells mit dem aufliegenden Reserverad das Betätigungswerkzeug wieder abgezogen wird, bewegt sich der Sperrhaken zurück in die Sperrposition und sichert somit die Stauposition der Hebevorrichtung.

Nachteilig bei dieser Hebevorrichtung ist es erforderlich, die Betätigung des Sperriegels mit der Seiltrommel räumlich zu kombinieren. Damit wird der Gestaltungsfreiraum für die Gestaltung übriger Fahrzeugbauteile erheblich eingeschränkt.

Der Erfindung liegt die Aufgabe zugrunde, eine Sicherung gegen das Herabfallen der Hebevorrichtung zum Tragen eines Reserverades derartig zu gestalten, daß bei einem einfachen Aufbau die Vielfalt der Fahrzeuggestaltung erhalten bleibt und trotzdem eine sichere Funktion gegeben ist.

Diese Aufgabe wird erfindungsgemäß mit den Merkmalen des Anspruchs 1 gelöst. Vorteilhafte Aus- und Weiterbildungen sind in den Ansprüchen 2 bis 6 beschrieben.

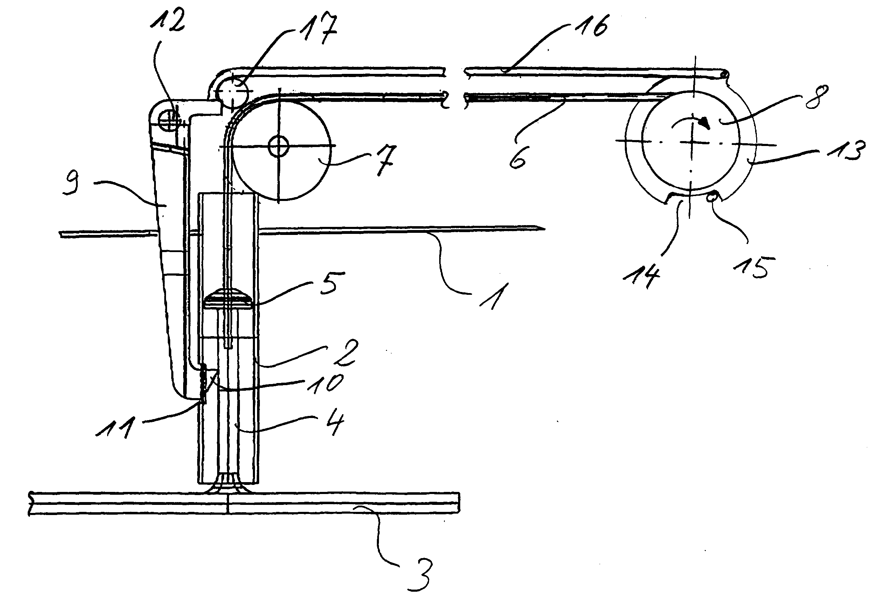

Ein Ausführungsbeispiel der Erfindung ist in der Zeichnung dargestellt und wird im folgenden näher beschrieben.

Unter dem Fahrzeugboden 1, vorzugsweise eines Kraftfahrzeuges, ist eine Hebevorrichtung angeordnet. Im Ausführungsbeispiel erstreckt sich unter den Fahrzeugboden 1 ein Führungsrohr 2, das mit diesem durch Schweißen oder Schrauben verbunden ist. Zum Tragen eines nicht dargestellten Reserverades dient eine Aufnahmeplatte 3, die mit einer Führungsstange 4, die einen Pilzkopf 5 trägt, im Führungsrohr 2 geführt und gehalten wird. Ein Seilzug 6 ist am aufnahmeplattenabgewandten Ende der Führungsstange 4 im Bereich des Pilzkopfes 5 angebracht. Der Seilzug 6 wird über ein oder mehrere Umlenkrollen 7 bis zu einer Seiltrommel 8 geführt. Durch das Auf- oder Abwickeln des Seilzuges 6 auf der Seiltrommel 8 erfolgt ein Heben oder Senken der Aufnahmeplatte 3 mit dem darauf liegenden Reserverad.

Im Ausführungsbeispiel ist im Bereich der Umlenkrolle 7 schwenkbeweglich ein Schwenkhaken 9 befestigt. Der Schwenkhaken 9 greift mit einem Sperrhaken 10 durch eine Öffnung 11 des Führungsrohres 2 und ist so positioniert, daß er bei angehobener Stauposition der Hebevorrichtung, wie sie in der Zeichnung dargestellt ist, unter den Pilzkopf 5 der Führungsstange 4 greift.

Der Drehpunkt 12 des Schwenkhakens 9 ist so gewählt, daß, hervorgerufen durch die Schwerkraft, ein Drehmoment erzeugt wird, das zum Einschwenken des Sperrhakens 10 in die Öffnung 11 führt (in der Zeichnung ein linksdrehendes Moment).

Die Seiltrommel 8, der ein Getriebe vorgeschaltet sein kann, wird mit einem nicht dargestellten Antriebswerkzeug, beispielsweise der Handkurbel des Wagenhebers oder dem Radmutternschlüssel, betätigt. Das Antriebswerkzeug wird dazu auf einen nicht dargestellten Antriebsstutzen der Seiltrommel 8 gesteckt. Der Antrieb kann jedoch auch motorisch mittels eines Elektro-, Hydraulik- oder Pneumatikmotors erfolgen. Die Seiltrommel 8 kann beliebig innerhalb oder außerhalb der Karosserie des Fahrzeuges angeordnet werden, Im Ausführungsbeispiel ist der Seilzug 6 zumindest über eine gewisse Länge als freigespanntes Seil ausgebildet und liegt zumindest nicht über seine gesamte Länge als Bowdenzug in einem elastischen oder starren Führungsrohr. Der Seilzug 6 umschlingt eine oberhalb des Führungsrohres 2 angeordnete Umlenkrolle 7. Die Umlenkrolle 7 ist so ausgebildet, daß das Ende des Seilzugs 6 zentrisch in das Führungsrohr einläuft.

An der Seiltrommel 8 ist eine Mitnahmescheibe 13 angebracht. Sie ist kraftschlüssig über eine Reibverbindung mit der Seiltrommel 8 verbunden. Über eine Ausnehmung 14, die mit einem Begrenzungsstift 15 zusammenwirkt, kann sich die Mitnahmescheibe 13 jedoch nur um einen begrenzten Schwenkwinkel mit der Seiltrommel 8 mitdrehen. Die Bewegung der Mitnahmescheibe 13 wird über ein Seil 16 oder einen Bowdenzug zum Schwenkhaken 9 übertragen. Im Ausführungsbeispiel ist auch für dieses Seil 16 eine weitere Umlenkrolle 17 vorgesehen.

Beim Aufwickeln des Seilzuges 6 auf die Seiltrommel 8 und damit Anheben der Aufnahmeplatte 3 mit dem daraufliegenden, nicht dargestellten Reserverad, führt auch die Mitnahmescheibe 13 eine rechtsdrehende Bewegung durch, bis diese Bewegung durch die Anlage der Ausnehmung 14 am Begrenzungsstift 15 begrenzt wird. Dadurch wird der Sperrhaken 10 des Schwenkhakens 9 in die Öffnung 11 des Führungsrohres 2 eingeschwenkt. Durch die klinkenartige Ausbildung des Sperrhakens 10 kann dieser durch den Pilzkopf 5 zurückgedrückt werden, bis der Pilzkopf 5 sich oberhalb des Sperrhakens 10 befindet. In dieser Lage ist die Aufnahmeplatte 3 mit dem aufliegenden Reserverad gegen Herabfallen gesperrt, wie es in der Figur dargestellt ist.

Durch Linksdrehen der Seiltrommel 8 wird auch die Mitnahmescheibe 13 linksdrehend mitgenommen, bis der Begrenzungsstift 15 am anderen Anschlag der Ausnehmung 14 zur Anlage gelangt. Über das Seil 16 wird dadurch der Schwenkhaken 9 nach außen geschwenkt, so daß sich der Sperrhaken 10 aus der Öffnung 11 und damit aus dem Führungsrohr 2 bewegt. Dadurch kann die Aufnahmeplatte 3 mit Führungsstange 4 und Pilzkopf 5 frei nach unten abgesenkt werden.

Alternativ zum Ausführungsbeispiel kann der Sperriegel auch als Schubzuhaltung ausgebildet werden, ähnlich der Anordnung des Riegels bei einer Türzuhaltung. Auch ein derartiger Riegel kann in seiner Bewegung durch das Seil 16 (das dann als Bowdenzug ausgebildet sein muß, um auch Schubkräfte übertragen zu können) entsprechend gesteuert werden.

### Bezugszeichenliste

- 1.: Fahrzeugboden
- 2.: Führungsrohr
- 3.: Aufnahmeplatte
- 4.: Führungsstange
- 5.: Pilzkopf
- 6.: Seilzug
- 7.: Umlenkrolle
- 8.: Seiltrommel
- 9.: Schwenkhaken
- 10.: Sperrhaken
- 11.: Öffnung
- 12.: Drehpunkt
- 13.: Mitnahmescheibe
- 14.: Ausnehmung
- 15.: Begrenzungsstift
- 16.: Seil
- 17.: Umlenkrolle

## Patentansprüche

1. Hebevorrichtung zur Aufnahme eines Reserverades unter einem Fahrzeugboden (1) mit einer Aufnahmeplatte (3) oder einem Aufnahmegestell für das Reserverad, wobei die Aufnahmeplatte (3) oder das Aufnahmegestell über einen, mittels einer Seiltrommel (8) angetriebenen beweglichen Seilzug (6) gehoben und gesenkt wird, mit einem Sperriegel, der die Hebevorrichtung in der angehobenen Stauposition gegen Herabfallen sichert, **dadurch gekennzeichnet,** daß der Sperriegel über ein reibschlüssig mit der Seiltrommel (8) verbundenes Mitnahmeelement bewegt wird.

2. Hebevorrichtung nach Anspruch 1, **dadurch gekennzeichnet,** daß die Seiltrommel (8) eine Mitnahmescheibe (13) oder einen Mitnehmer als Mitnahmeelement aufweist, die/der reibschlüssig mit der Seiltrommel (8) verbunden ist, deren Drehbewegung auf einen vorbestimmten Schwenkwinkel begrenzt mitvollzieht und ihre/seine Bewegung auf den Sperriegel übertragen wird.

3. Hebevorrichtung nach Anspruch 1 oder Anspruch 2, **dadurch gekennzeichnet,** daß die Tangentialbewegung des Mitnahmeelements über ein Seil (16) oder einen Bowdenzug auf den Sperriegel übertragen wird.

4. Hebevorrichtung nach einem oder mehreren der Ansprüche 1 bis 3, **dadurch gekennzeichnet,** daß der Sperriegel als Schwenkhaken (9) ausgebildet ist.

5. Hebevorrichtung nach einem oder mehreren der Ansprüche 1 bis 4, **dadurch gekennzeichnet,** daß der Sperriegel als Schubzuhaltung ausgebildet ist.

6. Hebevorrichtung nach einem oder mehreren der Ansprüche 1 bis 5, **dadurch gekennzeichnet,** daß der Sperriegel zusätzlich durch eine Feder in Riegelposition gebracht wird.
